# EUROPEAN PATENT APPLICATION

(11) **EP 1 351 083 A2**
(43) Date of publication of application: **08.10.2003**
(21) Application number: 03005008.2
(22) Date of filing: 05.03.2003
(51) Int. Cl.: G02B 6/44

(54) **Optical fiber cable assembly with interstitial support members**

(30) Priority: 07.03.2002 US 93212; 03.06.2002 US 159642
(71) Applicant: Alcoa Fujikura Ltd., Franklin, TN 37067 (US)
(72) Inventor: Militaru, Cristian, Duncan, SC 29334 (US); Davis, Lawrence E., Greenville, SC 29601-5927 (US)
(74) Representative: Ebner von Eschenbach, Jennifer

(57) **Abstract**

Fiber optic conduits are received around a central axis with their axes extending in the same direction as the central axis and with each fiber optic conduit tangent to two other fiber optic conduits. The fiber optic conduits define a central interstitial space (62) therebetween and a plurality of outer interstitial spaces (68) between each pair of fiber optic conduits (54) on a side thereof opposite the central interstitial space. A central interstitial member (74) is received in the central interstitial space tangent to the fiber optic conduits and an outer interstitial (66) member is received in each outer interstitial space tangent to the pair of fiber optic conduits defining the outer interstitial space. The central interstitial member can have a larger modulus of elasticity than each outer interstitial member.

## Description

### Field of the Invention

The present invention relates to optical fiber cables and, more particularly, to an improved geometrical arrangement and selection of elements forming an optical fiber cable that decreases the diameter, linear weight and cost of the optical fiber cable while, at the same time, improving its mechanical performance.

### Description of Related Art

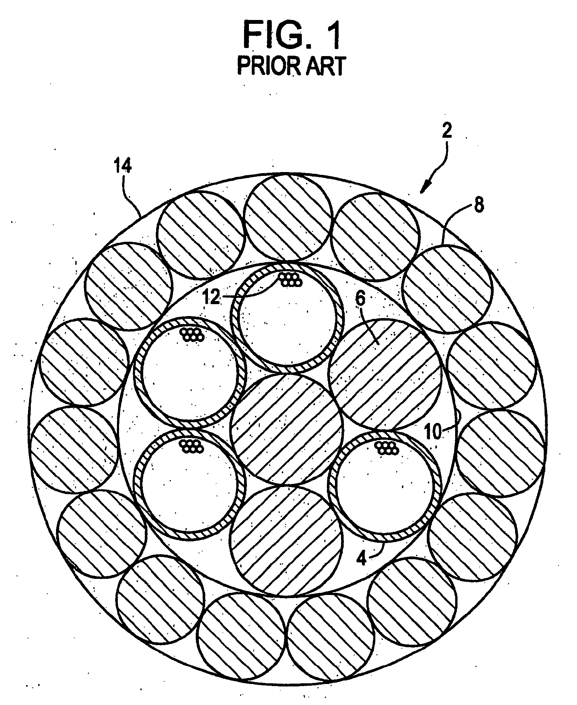

With reference to Fig. 1, a prior art optical fiber cable assembly 2 includes a plurality of fiber optic buffer tubes 4 and a plurality of adjacent wires 6 which provide some support to the cable design. A plurality of grounding members 8 surround tubes 4 and wires 6. When viewed from an end of optical fiber cable assembly 2, tubes 4 and wires 6 are received within an imaginary tube 10 which extends along the length of fiber optic cable assembly 2. Preferably, one wire 6 is positioned centrally within imaginary tube 10. This centrally positioned wire 6 is surrounded by tubes 4 and, if desired, other wires 6. The positions of tubes 4 and wires 6 around the centrally positioned wire 6 are determined based on the number of optical fibers 12 comprising optical fiber cable assembly 2. In the illustrated embodiment, a few optical fibers 12 are shown received within one of tubes 4. Preferably, however, each tube 4 is substantially filled with optical fibers 12.

In an exemplary embodiment of optical fiber cable assembly 2, tubes 4 and wires 6 surrounding the centrally positioned wire 6 have the same diameter and central wire 6 typically has a slightly larger diameter. The diameters of the various wires 6 and tubes 4 are selected so that each wire 6 and each tube 4 is tangent to any adjacent tubes 4 and/or wires 6. Similarly, each ground member 8 has a diameter that is selected so that each ground member 8 is tangent to its adjacent ground members 8. In practice, however, due to minor manufacturing variations in the diameters of grounding members 8, wires 6 and/or tubes 4, one or more grounding members 8 may not be tangent with their adjacent grounding members 8, and tubes 4 and wires 6 may not be tangent with their adjacent tubes 4 and/or wires 6.

Preferably, along the length of optical fiber cable assembly 2, tubes 4 and wires 6 are spiral wound in a first direction and grounding members 8 are spiral wound in a second direction, opposite the first direction. Subject to minor manufacturing variations, grounding members 8 are essentially tangent to an imaginary tube 10, which surrounds tubes 4 and wires 6 and which extends along the length of optical fiber cable assembly 2, and an imaginary tube 14, which surrounds grounding members 8 and which extends along the length of optical fiber cable assembly 2.

One problem with designs of optical fiber cable assemblies, like optical fiber cable assembly 2, is that the selection of wires 6 having the same, or nearly the same, outside diameter as tubes 4 increases the diameter and linear weight of optical fiber cable assembly 2. In addition, the number of tubes 4 comprising optical fiber cable assembly 2 will determine the number of wires 6 that can be utilized while maintaining the same geometric arrangement shown in Fig. 1. For example, in the geometric arrangement of optical fiber cable assembly 2 shown in Fig. 1, the sum of tubes 4 and wires 6 equals seven. Hence, the possible combination of tubes/wires is 1/6, 2/5, 3/4, 4/3, 5/2 and 6/1. As can be seen, the number of wires 6 decreases as the number of tubes 4 increases, and vice versa. Optical fiber cable assembly 2 is designed for aerial installation between utility poles or towers. As a result, in addition to supporting its own weight (self loading), optical fiber cable assembly 2 must also be designed to withstand weather related mechanical loads, such as wind loads, ice loads and snow loads, as well as electrical loads, such as short-circuits and lightning charges. Hence, decreasing the number of wires 6 while simultaneously increasing the number of tubes 4 is contrary to the need to increase the capacity of optical fiber cable assembly 2 to withstand weather related mechanical loads and electrical loads by increasing the number of wires 6 when the number of tubes 4 increases.

In addition, because of the geometric arrangement of tubes 4, wires 6 and grounding members 8 shown in Fig. 1, optical fiber cable assembly 2 has an outside diameter defined by imaginary tube 14. As would be appreciated by. one of ordinary skill in the art, the diameter of imaginary tube 14 affects the possible weather related mechanical loads that could be experienced by optical fiber cable assembly 2 and related support structures. Namely, increasing the outside diameter of imaginary tube 14 increases the possible weather related mechanical loads that could be experienced by optical fiber cable assembly 2 and related support structures. In contrast, decreasing the outside diameter of imaginary tube 14 decreases the possible weather related mechanical loads that could be experienced by optical fiber cable assembly 2 and related support structures. Accordingly, in the design of optical fiber cable assemblies it is desirable to minimize the outside diameter while simultaneously maintaining or increasing the number of tubes 4 while, at the same time, providing a sufficient number of wires 6 of sufficient capacity to withstand expected self loading, possible weather related mechanical loads and electrical loads thereon when optical fiber cable assembly 2 is being installed and is in use. However, the geometric arrangement of tubes 4, wires 6 and grounding members 8 forming current optical fiber cable assemblies does not provide such an optimum design.

Prior art optical fiber cable assemblies of the type described above typically define an optical core surrounded by one or more jackets. The optical core includes a plurality, e.g., six, tubes 4 surrounding a central member. Each tube 4 has a wall that encloses a plurality of optical fibers. The wall of each tube 4 is preferably formed from a synthetic thermoplastic compound, such as polybutylene- terephthalate (PBT), or polyester, such as nylon, or polyolefin, such as polyethylene. The central member is formed from a fiber reinforced plastic (FRP) rod formed from silica fibers encased in plastic coating.

The FRP rod forming the central member has a silica content between 70% and 85% and a plastic content between 30% and 15%. Because of the percentage of silica, the FRP rod is relatively rigid and has a relatively high modulus of elasticity, e.g., 50,300 N/mm² ± 10%.

As discussed above, the optical core is surrounded by a plurality of jackets. In an embodiment designed for aerial installations, the optical core is surrounded by an inner jacket formed from polyolefin, such as polyethylene, or polyester, such as nylon, an intermediate, strength layer formed from an Aramid yarn or other strength member, such as fiber glass, and an outer jacket, also formed from polyolefin such as polyethylene, or polyester, such as nylon. The optical fiber cable assembly may also include a Mylar tape and/or polyester binder disposed between the optical core and/or the inner jacket and between the strength layer and the outer jacket. In addition, polyester rip cords can be included between the inner jacket and the Mylar tape adjacent the optical core and/or between the outer jacket and the Mylar tape adjacent the strength layer.

Optical fiber cable assemblies designed for duct or premise applications are substantially the same as those designed for aerial installations except that the outer jacket and strength layer can he omitted whereupon the inner jacket becomes the outer jacket.

Problems with the prior art design of optical fiber cable assemblies include the inability to reduce the diameter of the optical core or reduce the number of Aramid yams forming the strength layer surrounding the optical core while maintaining an acceptable degree of mechanical loading capacity of the cable assembly. Because of these inabilities, no reductions are available in the overall diameter of the optical fiber cable assembly, the circumferences and, hence, weights of the inner and outer jackets, the overall linear weight of the cable assembly or the overall cost of the cable assembly.

It is, therefore, desirable to provide an improved optical fiber cable assembly having an improved geometric design with improved mechanical and electrical performance over prior art fiber optic cable assemblies. This improved geometric design enables the same number of optical fibers to be received in an optical fiber cable assembly having a smaller diameter than prior art optical fiber cable assemblies while maintaining an acceptable degree of mechanical loading capacity, e.g., self loading and weather related mechanical loading, commensurate with its smaller outside diameter and lower linear weight. Still other desirable features will become apparent to those of ordinary skill in the art upon reading and understanding the following detailed description.

### Summary of the Invention

The invention is an optical cable assembly that includes a plurality of elongated cylindrical fiber optic tubes arranged with their axes extending in the same direction. The axis of each fiber optic tube is positioned at a corner of (i) an imaginary triangle (ii) or an imaginary square. The plurality of fiber optic tubes are arranged with each fiber optic tube tangent to two other fiber optic tubes and a first imaginary tube which surrounds the fiber optic tubes and which has an imaginary axis which extends in the same direction as the axes of the fiber optic tubes. Each pair of adjacent fiber optic tubes and the first imaginary tube define therebetween an interstitial space. The optical fiber cable assembly further includes a plurality of elongated cylindrical interstitial members. Each interstitial member is received in one of the interstitial spaces tangent to the two fiber optic tubes and the first imaginary tube defining the interstitial space, with the axis of each interstitial member extending in the same direction as the axes of the fiber optic tubes.

A plurality of elongated cylindrical grounding members surround the plurality of tubes and the plurality of interstitial members. The axes of the grounding members extend in the same direction as the axes of the fiber optic tubes. The plurality of grounding members are arranged whereupon each grounding member is tangent to two other grounding members and the first imaginary tube.

The invention is also an optical fiber cable assembly comprising a plurality of elongated fiber optic conduits received around a longitudinally extending central axis with a longitudinal axis of each fiber optic conduit extending in the same direction as the central axis and with each fiber optic conduit tangent to two other fiber optic conduits. The plurality of fiber optic conduits define a first interstitial space therebetween and define a plurality of second interstitial spaces between each pair of fiber optic conduits on a side thereof opposite the first interstitial space. A plurality of elongated interstitial members are received around the central axis with their longitudinal axes extending in the same direction as the central axis. Each second interstitial space receives one of the interstitial members tangent to the pair of fiber optic conduits defining the second interstitial space.

When viewed from an end of the optic fiber cable assembly, the longitudinal axis of each fiber optic conduit is positioned at one corner of (i) an imaginary triangle or (ii) an imaginary square.

The interstitial members and the fiber optic conduits are also tangent to a first imaginary tube which surrounds the interstitial members and the fiber optic conduits and which has a longitudinal axis coaxial with the central axis.

A central interstitial member can be received in the first interstitial space with an axis of the central interstitial member coaxial with the central axis. When viewed from an end of the optical fiber cable assembly, the first interstitial space is defined by four fiber optic conduits having their axes positioned at corners of the imaginary square.

A plurality of grounding members surrounds the interstitial members and the fiber optic conduits with the longitudinal axes of the grounding members extending in the same direction as the central axis. The plurality of grounding members is arranged with each grounding member tangent to two other grounding members and the first imaginary tube.

The invention is also an optical fiber cable assembly that includes an optical core having a plurality of elongated, hollow buffer tubes, a plurality of elongated outer interstitial members and an elongated central interstitial member. The plurality of buffer tubes is arranged with their axes extending in the same direction. When viewed from an end of the optical fiber cable assembly, the axis of each buffer tube is positioned at a corner of an imaginary triangle or an imaginary square. The plurality of buffer tubes is arranged with each buffer tube tangent to two other buffer tubes whereupon each pair of adjacent buffer tubes define an outer interstitial space therebetween. Each outer interstitial member is received in one of the outer interstitial spaces tangent to the two buffer tubes defining the outer interstitial space. The axis of each outer interstitial member extends in the same direction as the axes of the buffer tubes. The central interstitial member is received in a central interstitial space formed between the plurality of buffer tubes. The central interstitial member is positioned tangent to the plurality of buffer tubes with an axis of the central interstitial member extending in the same direction as the axes of the buffer tubes. The central interstitial member and the outer interstitial members have different moduli of elasticity, with the central interstitial member having a larger modulus of elasticity than the modulus of elasticity of each outer interstitial member.

In one exemplary embodiment of an optical fiber cable assembly, the central interstitial member is a fiber reinforced plastic (FRP) rod having silica fibers encased in a plastic coating, with a silica content between 70% and 85% by volume. It has been observed that FRPs having a higher percentage of silica fibers have a greater modulus of elasticity. In this exemplary embodiment, the FRP rod used as the central interstitial member has a modulus of elasticity of 50,300 N/mm² ± 10%. Moreover, in this exemplary embodiment, each outer interstitial member is also a FRP rod having silica fibers encased in a plastic coating, with a silica content between 50% and 70% by volume and with a modulus of elasticity of 37,700 N/mm² ± 10^{%}.

The lower modulus of elasticity of the outer interstitial members make them less rigid than the central interstitial member and enables them to be spiral wound around the central interstitial member, together with the buffer tubes. The central interstitial member having a higher modulus of elasticity is not easily spiral wound. In an exemplary embodiment, the outer interstitial members and buffer tubes are wound spirally at a winding pitch between 8 and 20 times a diameter of the optical core. For aerial applications, the outer interstitial members and buffer tubes are preferably wound spirally at a winding pitch between 8 and 16 times the diameter of the optical core. For duct or premise applications, the outer interstitial members and buffer tubes are preferably wound spirally at a winding pitch between 10 and 20 times the diameter of the optical core.

The optical fiber cable assembly can also include a Mylar tape and/or a polyester binder disposed helically around the optical core tangent to the buffer tubes and outer interstitial members. An elongated polyester rip cord can be disposed on a side of the Mylar tape and/or polyester binder opposite the optical core. The longitudinal axis of the rip cord extends in the same direction, e.g. parallel, as the axes of the buffer tubes.

For optical fiber cable assemblies designed for duct or premise applications, a jacket comprised of, for example, polyolefin such as polyethylene, or polyester, such as nylon, surrounds the optical core. For optical fiber cable assemblies designed for aerial applications, an inner jacket comprised of, for example, a polyolefin, such as polyethylene, or polyester, such as nylon, surrounds the optical core, a strength layer comprised of, for example, Aramid or fiber glass yarn surrounds the inner jacket and a outer jacket comprised of, for example, a polyolefin, such as polyethylene, or polyester, such as nylon, surrounds the strength layer. In this latter assembly, a Mylar tape and/or a polyester binder can be disposed between the strength layer and the outer jacket. An elongated polyester rip cord can also be disposed between the outer jacket and the Mylar tape and/or polyester binder disposed adjacent the strength layer.

Lastly, the invention is an optical fiber cable assembly that includes a plurality of fiber optic conduits received around a longitudinally extending central axis with a longitudinal axis of each fiber optic conduit extending in the same direction as the central axis and with each fiber optic conduit tangent to two other fiber optic conduits. The plurality of fiber optic conduits define a central interstitial space therebetween and define a plurality of outer interstitial spaces between each pair of fiber optic conduits on a side thereof opposite the central interstitial space. A plurality of elongated outer interstitial members is received around the central axis with their longitudinal axes extending in the same direction as the central axis. Each outer interstitial space receives one of the outer interstitial members tangent to the pair of optical fiber conduits defining the outer interstitial space. A central interstitial member is received in the central interstitial space tangent to the fiber optic conduits and with an axis of the central interstitial member coaxial with the central axis. The central interstitial member has a.larger modulus of elasticity than each outer interstitial member.

The outer interstitial members and the fiber optic conduits can be wound spirally around the central interstitial member. When viewed from an end of the optical fiber cable assembly, the longitudinal axis of each fiber optic conduit is positioned at a corner of an imaginary triangle or an imaginary square.

The optical fiber cable assembly includes a first jacket surrounding the buffer tubes and outer interstitial members. The optical fiber cable assembly can also include a second jacket surrounding the first jacket. Mylar tape and/or polyester binder can be disposed (i) inside the inner jacket around the buffer tubes and outer interstitial members and/or (ii) between the first and second jackets. An elongated polyester rip cord can be disposed between the (i) first jacket and the Mylar tape and/or polyester binder adjacent the buffer tubes and outer interstitial members and/or (ii) between the first and second jackets. The rip cord has a longitudinal axis that extends in the same direction as the axis of the optical fiber tubes.

The first and second jackets are protective covers. The optical fiber cable assembly can further include a strength layer, preferably formed from Aramid or fiber glass yarn, disposed between the first and second outer jackets.

### Brief Description of the Drawings

Fig. 1 is an end view of a prior art optical fiber cable assembly; and
Figs. 2-7 are end views of optical fiber cable assemblies in accordance with various embodiments of the present invention.

### Detailed Description of the Invention

The present invention will be described with reference to the accompanying Figs. where like reference numbers correspond to like elements.

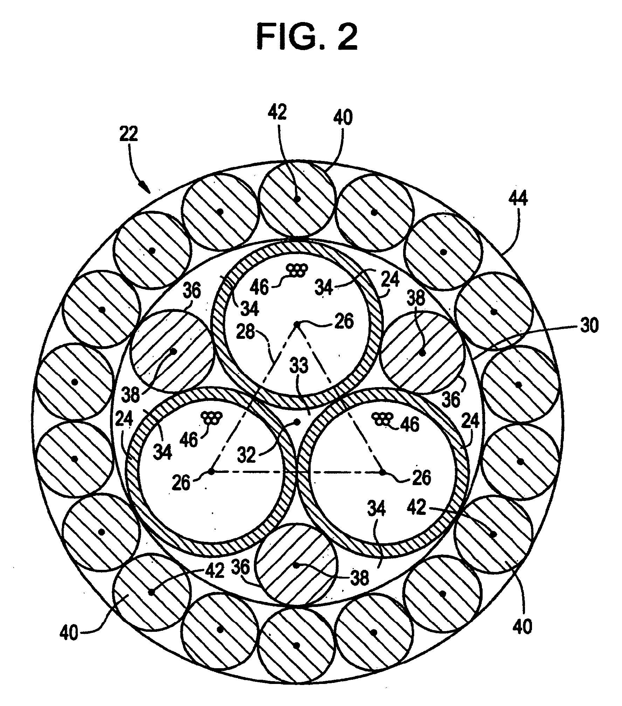

With reference to Fig. 2, in accordance with one embodiment of the present invention, an optical fiber cable assembly 22 includes a plurality of elongated cylindrical conduits or fiber optic tubes 24 arranged with their longitudinal axes 26 extending in the same direction. In this embodiment, when viewed from an end of optical fiber cable assembly 22, the axis 26 of each fiber optic tube 24 is positioned at one corner of an imaginary triangle 28. Fiber optic tubes 24 are arranged so that each fiber optic tube 24 is tangent to the other two fiber optic tubes 24 and a first imaginary tube 30 which surrounds fiber optic tubes 24. First imaginary tube 30 has a longitudinal axis 32 which is received in a first, central interstitial space 33 defined by fiber optic tubes 24 and which extends in the same direction as the axes 26 of fiber optic tubes 24. Each pair of adjacent fiber optic tubes 24 and first imaginary tube 30 define therebetween a second interstitial space 34.

Optical fiber cable assembly 22 further includes a plurality of elongated cylindrical wires or interstitial members 36. Each interstitial member 36 is received in one of the second interstitial spaces 34 tangent to the two fiber optic tubes 24 and first imaginary tube 30 defining the second interstitial space 34. Interstitial members 36 are positioned in second interstitial spaces 34 with their longitudinal axes 38 extending in the same direction as axes 26 of fiber optic tubes 24.

A plurality of elongated cylindrical grounding members 40 surround fiber optic tubes 24 and interstitial members 36. Grounding members 40 have longitudinal axes 42 which extend in the same direction as axes 26 of fiber optic tubes 24, At each point along the length of fiber optic cable assembly 22, each grounding member 40 is preferably tangent to its two adjacent grounding members 40 and first imaginary tube 30.

Along the length of optical fiber cable assembly 22, fiber optic tubes 24 and interstitial members 36 are wound spirally in a first direction around axis 32 and grounding members 40 are wound spirally in a second direction, opposite the first directions around axis 32. As a result of these different spiral winding directions, each grounding member 40 is tangent to each fiber optic tube 24 and each second interstitial member 36 at various spaced points along the length of optical fiber cable assembly 22.

Fiber optic tubes 24 and interstitial members 36 are wound spirally with the same winding pitch, typically between ten and sixteen times the diameter of first imaginary tube 30. However, if required by the application, fiber optic tubes 24 and interstitial members 36 can have a lesser winding pitch, as low as 9.5 times the diameter of first imaginary tube 30. Grounding members 40 are wound spirally at a winding pitch typically between ten and sixteen times the diameter of a second imaginary tube 44 which is coaxial with first imaginary tube 30 and which surrounds and is tangent to grounding members 40.

In an exemplary embodiment of optical fiber cable assembly 22, each fiber optic tube 24 has an inside diameter of 3.4 millimeters, an outside diameter of 3.8 millimeters and is preferably formed from stainless steel. The inside diameter of 3.4 millimeters enables each fiber optic tube 24 to receive up to seventy-two optical fibers 46. Each interstitial member 36 has an outside diameter of 1.83 millimeters and is preferably formed from an aluminum alloy, such as aluminum alloy 6201. Each grounding member 40 has an outside diameter of 2.45 millimeters and is preferably formed from an aluminum clad steel. In this exemplary embodiment, second imaginary tube 44 has an outside diameter of 13.09 millimeters and first imaginary tube 30 has an outside diameter of 8.19 millimeters.

Preferably, each interstitial member 36 and each grounding member 40 is formed from a solid wire. However, this is not to be construed as limiting the invention since each interstitial member 36 and/or each grounding member 40 can also be formed from stranded wires or filaments.

Preferably and in practice, fiber optic tubes 24 and interstitial members 36 have a 100% wire fit. That is, each fiber optic tube 24 is tangent to the two other fiber optic tubes 24 and the adjacent interstitial member 36. In addition, grounding members 40 preferably have a 100% wire fit. However, in practice, grounding members 40 have a wire fit that is typically no less than 98.5%. Thus, one or more small gaps may exist between one or more adjacent grounding members 40. In practice, however, most grounding members 40 are tangent to their adjacent grounding members 40.

It is to be appreciated that the exemplary embodiment shown in Fig. 2 is provided to illustrate a single example of optical fiber cable assembly 22. However, this exemplary embodiment is not to be construed as limiting the present invention since the outside diameters of tubes 24, interstitial members 36 and grounding members 40 can be sized as desired.

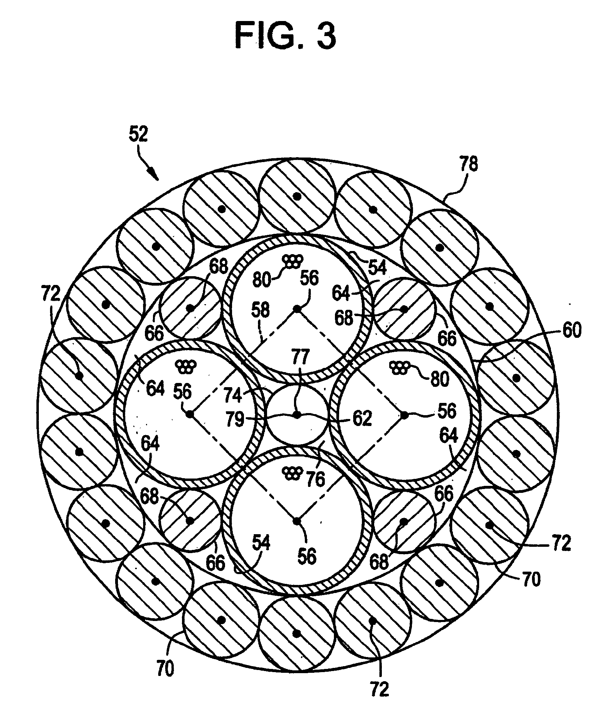

With reference to Fig. 3, in accordance with another embodiment of the present invention, an optical fiber cable assembly 52 includes a plurality of elongated cylindrical conduits or fiber optic tubes 54 arranged with their longitudinal axes 56 extending in the same direction. In this embodiment, when viewed from an end of optical fiber cable assembly 52, the axis 56 of each fiber optic tube 54 is positioned at one corner of an imaginary diamond or square 58. Fiber optic tubes 54 are arranged so that each fiber optic tube 54 is tangent to its two adjacent fiber optic tubes 54 and a first imaginary tube 60 which surrounds fiber optic tubes 54. First imaginary tube 60 has a longitudinal axis 62 which is received in a first, central interstitial space 76 formed between fiber optic tubes 54 and which extends in the same direction as axes 56 of fiber optic tubes 54. Each pair of adjacent fiber optic tubes 54 and first imaginary tube 60 define therebetween a second interstitial space 64.

Optical fiber cable assembly 52 further includes a plurality of elongated cylindrical interstitial members 66. Each interstitial member 66 is received in one of the second interstitial spaces 64 tangent to the two fiber optic tubes 54 and the portion of first imaginary tube 60 defining the interstitial space 64. Each interstitial member 66 includes a longitudinal axis 68 which extends in the same direction as axes 56 of fiber optic tubes 54.

A A plurality of elongated cylindrical grounding members 70 surround fiber optic tubes 54 and interstitial members 66. Grounding members 70 have longitudinal axes 72 which extend in the same direction as axes 56 of fiber optic tubes 54. At each point along a length of optical fiber cable assembly 52, each grounding member 70 is preferably tangent to its two adjacent grounding members 70 and first imaginary tube 60.

Optical fiber cable assembly 52 further includes a central elongated cylindrical interstitial member 74 which is received in central interstitial space 76 tangent to fiber optic tubes 54. Central interstitial member 74 includes a central axis 77 which is coaxial with axis 62 of first imaginary tube 60.

Along the length of optical fiber cable assembly 52, fiber optic tubes 54 and interstitial members 66 are wound spirally in a first direction around axis 62 and grounding members 70 are wound spirally in second direction, opposite the first direction, around axis 62. As a result of these different spiral winding directions, each grounding member 70 is tangent to each fiber optic tube 54 and each second interstitial member 66 at various spaced points along the length of optical fiber cable assembly 52.

Fiber optic tubes 54 and interstitial members 66 are wound spirally with the same winding pitch typically between ten and sixteen times the diameter of first imaginary tube 60. However, if required by the application, fiber optic tubes 54 and interstitial members 66 can have a lesser winding pitch, as low as 9.5 times the diameter of first imaginary tube 60. Grounding members 70 are wound spirally at a winding pitch typically between ten and sixteen times the diameter of a second imaginary tube 78 which is coaxial with first imaginary tube 60 and which surrounds and is tangent to grounding members 70.

In an exemplary embodiment of optical fiber cable assembly 52, fiber optic tubes 54, interstitial members 66 and grounding members 70 are formed from the same materials used to form fiber optic tubes 24, interstitial members 36 and groundings members 40 of optical fiber cable assembly 22 discussed above in connection with Fig. 2. In this exemplary embodiment, each fiber optic tube 54 has an inside diameter of 3.4 millimeters and an outside diameter of 3.8 millimeters. The inside diameter of 3.4 millimeters enables each fiber optic tube 54 to receive up to seventy-two optical fibers 80. Each interstitial member 66 and central interstitial member 74 has an outside diameter of 1.57 millimeters and each grounding member 70 has an outside diameter of 2.5 millimeters. In this exemplary embodiment, second imaginary tube 78 has an outside diameter of 14.17 millimeters and first imaginary tube 60 has an outside diameter of 9.17 millimeters.

Preferably, each interstitial member 66 and each grounding member 70 is formed from a solid wire. However, this is not to be construed as limiting the invention since each interstitial member 66 and each grounding member 70 can be formed from stranded wires or filaments.

Preferably and in practice, fiber optic tubes 54 and interstitial members 66 have a 100% wire fit. In addition, grounding members 70 preferably have a 100% wire fit. However, in practice, grounding members 70 have a wire fit that is typically no less than 98.5%. Thus, one or more small gaps may exist between one or more adjacent grounding members 70. In practice, however, most grounding members 70 are tangent to their adjacent grounding members 70.

It is to be appreciated that the exemplary embodiment shown in Fig. 3 is provided to illustrate a single example of optical fiber cable assembly 52. However, this exemplary embodiment is not to be construed as limiting the present invention since the outside diameters of tubes 54, interstitial members 66 and grounding wires 70 can be sized as desired.

The optical fiber cable assembly 22 or 52 in accordance with the present invention has a diameter that is 15 to 21% smaller than prior art fiber optic cable assemblies capable of carrying the same number of optical fibers. This reduced diameter decreases the susceptibility of the optical fiber cable assembly to weather related mechanical loads. In addition, the use of smaller diameter interstitial wires and grounding members reduces the overall linear weight of the fiber optic cable assembly over prior art optical fiber cable assemblies capable of carrying the same number of optical fibers. This reduced weight decreases the self loading of the optical fiber cable assembly and reduces the load on overhead structures at the points of attachment of the optic fiber cable assembly thereto.

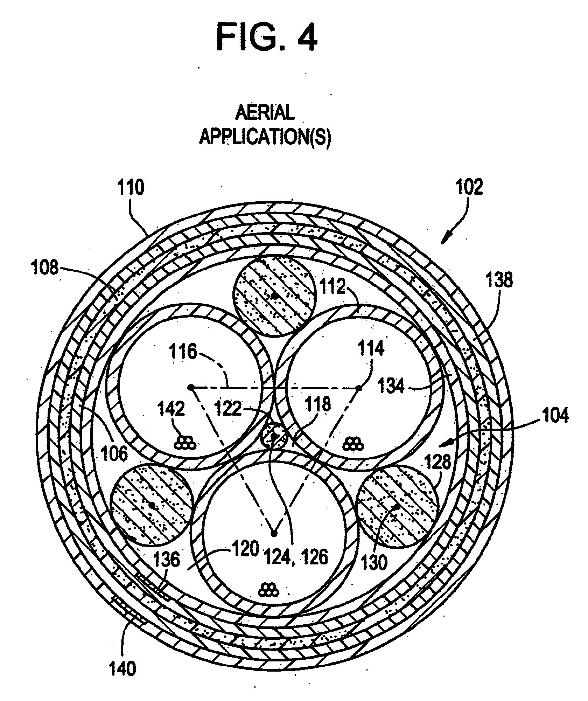

With reference to Fig. 4, an optical fiber cable assembly 102 designed for aerial applications includes an optical core 104 surrounded by an inner jacket 106, a strength layer 108 and an outer jacket 110. Optical core 104 includes three hollow, elongated and cylindrical buffer tubes 112 arranged with their axes 114 extending in the same direction. When viewed from an end of optical core 104, the axis of each buffer tube 112 is positioned at a corner of an imaginary triangle 116 with the outside diameter of each buffer tube 112 tangent to the two other buffer tubes 112.

Buffer tubes 112 define therebetween a first, central interstitial space 118 and a plurality of second, outer interstitial spaces 120. More specifically, each pair of adjacent buffer tubes 112 define therebetween on a side thereof opposite first, central interstitial space 118 one of the second, outer interstitial spaces 120.

A central, elongated outer interstitial member 122 is received in first, central interstitial space 118 tangent to buffer tubes 112. Central interstitial member 122 has an axis 124 positioned substantially coaxial with a central axis 126 of optical fiber cable assembly 102. An outer interstitial member 128 is received in each second, outer interstitial space 120 tangent to the buffer tubes 112 defining the second, outer interstitial space 120. Each outer interstitial member 128 has an axis 130 that extends in the same direction as axes 114 of buffer tubes 112.

Central interstitial member 122 is a rigid, fiber reinforced plastic (FRP) rod having silica fibers encased in a plastic coating. An. exemplary FRP rod used as a central interstitial member 122 has a silica fiber content between 70% and 85% by volume and a plastic content between 30% and 15% by volume. It has been observed that FRP rods having a higher silica fiber content have a greater rigidity and, hence, a greater modulus of elasticity. An exemplary FRP rod used as a central interstitial member 122 has a modulus of elasticity of 50,300 N/mm² ± 10%.

Each outer interstitial member 128 is also an FRP rod. However, since, during assembly of optical fiber cable assembly 102, outer interstitial members 128 and buffer tubes 112 are wound spirally around central interstitial member 122, each outer interstitial member 128 is less rigid than central interstitial member 122. In other words, each outer interstitial member 128 is semi-rigid.

In order for each outer interstitial member 128 to be less rigid than central interstitial member 122, the FRP rod forming each outer interstitial member 128 has a lower silica fiber content than central interstitial member 122. An exemplary FRP rod used as an outer interstitial member 128 has a silica fiber content between 50% and 70%, a plastic content between 50% and 30% and a modulus of elasticity of 37,700 N/mm² ± 10%.

It is to be appreciated, that the foregoing percentages of silica fiber and plastic content and moduli of elasticity for central interstitial member 122 and outer interstitial members 128 are only for the purpose of illustration and are not to be construed as limiting the invention.

As discussed above, outer interstitial members 128 and buffer tubes 112 are wound spirally around central interstitial member 122. An exemplary optical fiber cable assembly 102 has its outer interstitial members 122 and buffer tubes 112 wound spirally at a winding pitch between 8 and 20 times the diameter of optical core 104. For aerial applications, outer interstitial members 128 and buffer tubes 112 are wound spirally at a winding pitch between 8 and 16 times the diameter of optical core 104. For duct applications, outer interstitial members 128 and buffer tubes 112 are wound spirally at a winding pitch between 10 and 20 times the inside diameter of optical core 104.

A layer 134 of Mylar tape and/or polyester binder can be disposed, e.g., helically wound, around buffer tubes 112 and outer interstitial members 128 inside inner jacket 106. An elongated rip cord 136, preferably formed of a polyester, can be disposed between inner jacket 106 and layer 134. Another. layer 138 of Mylar tape and/or polyester binder can also be disposed between strength layer 108 and outer jacket 110. An elongated rip cord 140, also preferably formed of polyester, can be disposed between layer 138 and outer jacket 110. The polyester binder which can be utilized to form layer 134 and/or layer 138 is preferably configured to block the passage of moisture, e.g., water, therethrough and into optical core 104.

Rip cords 136 and 140 have their longitudinal axes extending in the same direction as the longitudinal axes of buffer tubes 112. When pulled radially away from central interstitial member 122, rip cord 140 tears outer jacket 110 longitudinally. This tearing enables select portions of outer jacket 110 to be removed by the subsequent trimming thereof without damaging strength layer 108 or inner jacket 106. Similarly, when pulled radially away from central interstitial member 122, rip cord 136 tears inner jacket 106 longitudinally whereupon inner jacket 106 can be removed by selective trimming thereof without damaging layer 134.

Each buffer tube 112 is formed from a synthetic thermoplastic compound, such as polybutylene-terephthalate (PBT), or polyester, such as nylon, or polyolefin, such as polyethylene. In an exemplary optical fiber cable assembly, each buffer tube 112 has an inside diameter of 2.7 mm and an outside diameter of 3.55 mm. The 2.7 mm inside diameter enables each buffer tube 112 to receive up to twenty-four optical fibers 142. Inner jacket 106 and outer jacket 110 are formed from polyolefin, such as polyethylene, or polyester, such as nylon.

Strength layer 108 is formed from a strength material, such as woven Aramid or fiber glass yarn. In an exemplary embodiment, strength layer 108 is formed from 70 to 120 ends of Aramid yarn, with each end of Aramid yarn having between 1,000 and 4,000 Aramid filaments, a breaking strength between 290 and 1,800 N and a modulus of elasticity of 100,000 N/mm² + 20% or - 10%.

In the exemplary optical fiber cable assembly where each buffer tube 112 has an inside diameter of 2.7 mm and an outside diameter of 3.55 mm, central interstitial member 122 has a diameter of 0.55 mm, each outer interstitial member 128 has a diameter of 1.71. mm, inner jacket 106 has a thickness between 0.25 and 1.4 mm and outer jacket 110 has a thickness between 0.4 and 1.8 mm.

It is to be appreciated that the above described materials and dimensions of the various elements of the exemplary optical fiber cable assembly are for the purpose of illustration and are not to be construed as limiting the invention.

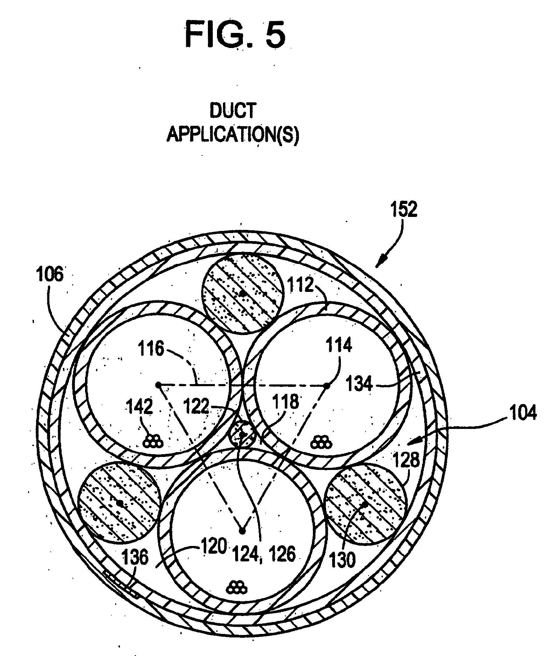

With reference to Fig. 5 and with continuing reference to Fig. 4, an optical fiber cable assembly 152 designed for application in ducts, premises, conduits, raceways, and the like (hereinafter "duct applications"), has the same configuration of optical core 104 as optical fiber cable assembly 102. However, since optical fiber cable assembly 152 is designed for duct applications, outer jacket 110, layer 138 and strength layer 108 in optical fiber cable assembly 102 can be omitted in optical fiber cable assembly 152 whereupon inner jacket 106 becomes the outer jacket. Other than these omissions, optical fiber cable assembly 152 can be the same as optical fiber cable assembly 102.

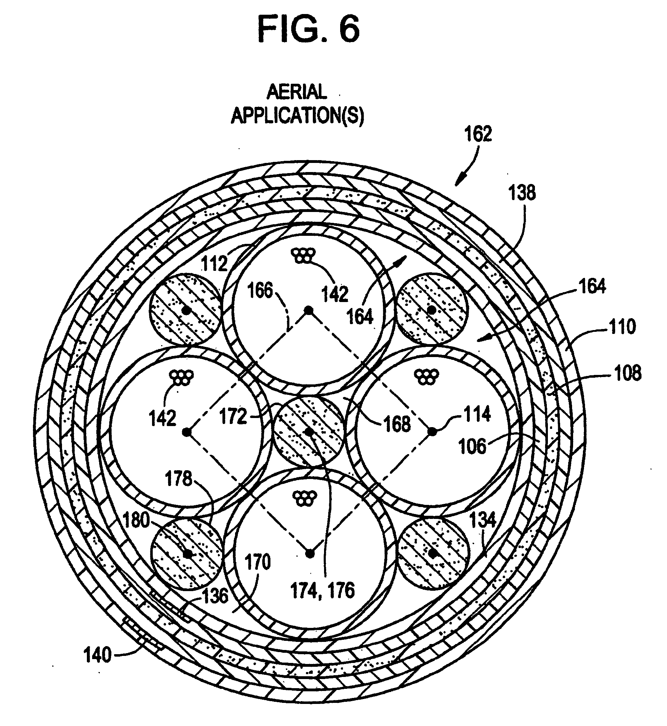

With reference to Fig. 6, and with continuing reference to Fig. 4, an optical fiber cable assembly 162 has an optical core 164 that is surrounded by inner jacket 106, strength layer 108, outer jacket 110 and layers 134 and 138 of Mylar tape and/or polyester binder in the manner described above in connection with optical fiber cable assembly 102. Optical core 164, however, has four buffer tubes 112 arranged with their axes extending in the same direction. When viewed from an end of optical core 164, the axis 114 of each buffer tube 112 is positioned at a corner of an imaginary square 166, with the outside diameter of each buffer tube 112 tangent to two other buffer tubes 112.

In optical core 164, buffer tubes 112 define therebetween a first, central interstitial space 168 and a plurality of second, outer interstitial spaces 170. More specifically, in optical core 164, each pair of adjacent buffer tubes 112 define therebetween on a side thereof opposite first, central interstitial space 168 one of the second, outer interstitial spaces 170.

A central, elongated outer interstitial member 172 is received in first, central interstitial space 168 tangent to buffer tubes 112 and with an axis 174 of central interstitial member 172 positioned substantially coaxial with a central axis 176 of optical fiber cable assembly 162. An outer interstitial member 178 is received in each second outer interstitial space 170 tangent to the pair of buffer tubes 112 defining the second, outer interstitial space 170. Each outer interstitial member 178 has an axis 180 that extends in the same direction as the axes 114 of buffer tubes 112.

Like central interstitial member 122, central interstitial member 172 is a rigid FRP rod having a relatively high modulus of elasticity, e.g., 50,300 N/mm² ± 10%. In order to realize this rigidity and relatively high modulus of elasticity, central interstitial member 172 has a silica fiber content between 70% and 85% by volume and a plastic content between 30% and 15% by volume.

Similarly, like outer interstitial members 128, each outer interstitial member 178 is a semi-rigid FRP rod having a lower modulus of elasticity, e.g., 37,700 N/mm² ± 10%, than the modulus of elasticity of central interstitial member 172. In order to realize this lower rigidity and modulus of elasticity, each outer interstitial member 178 has a lower silica fiber content than central interstitial member 172. An exemplary fiber reinforced plastic rod used as an outer interstitial member 178 has a silica fiber content between 50% and 70% by volume and a plastic content between 50% and 30% by volume.

It is to be appreciated that the foregoing percentages of silica fiber and plastic content and moduli of elasticity for central interstitial member 172 and outer interstitial members 178 are for the purpose of illustration and are not to be construed as limiting the invention.

During assembly of optical fiber cable assembly 162, outer interstitial members 178 and buffer tubes 112 are wound spirally around central interstitial member 172 at a winding pitch between 8 and 20 times the diameter of optical core 164. For aerial applications, the winding pitch is between 8 and 16 times the diameter of optical core 164. For duct applications, the winding pitch is between 10 and 20 times the diameter of an optical core 164.

In an exemplary optical fiber cable assembly 162, each buffer tube 112 has an inside diameter of 2.7 mm and an outside diameter of 3.55 mm. This inside diameter enables each buffer tube 112 to receive up to twenty-four optical fibers 142. In this exemplary optical fiber cable assembly 162, central interstitial members 172 and each outer interstitial member 178 have a diameter of 1.5 mm. Since jackets 106 and 110, strength layer 108, layers 134 and 138, and rip cords 136 and 140 are the same as described above in connection with Fig. 4, no description of their construction or physical dimensions will be described in connection with Fig. 6 to avoid redundancy.

It is to be appreciated that the above described materials and dimensions of optical fiber cable assembly 162 are for the purpose of illustration and are not to be construed as limiting the invention.

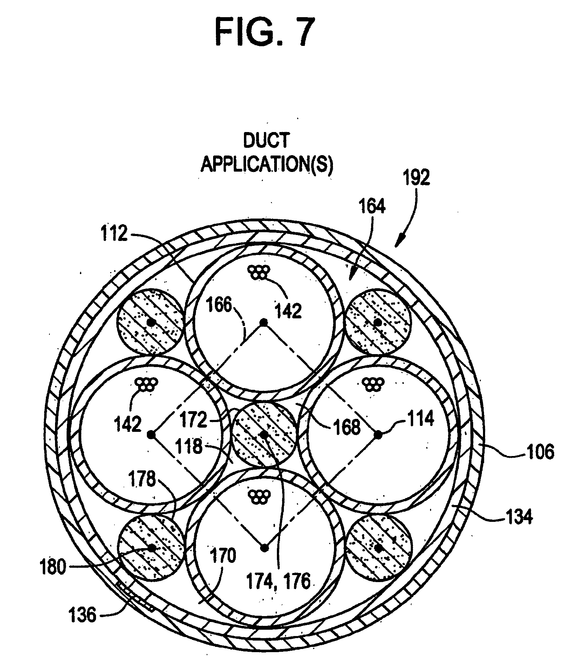

With reference to Fig. 7, and with continuing reference to Fig. 6, an optical fiber cable assembly 192 is substantially the same as optical fiber cable assembly 162. However, since optical fiber cable assembly 192 is designed for duct applications, outer jacket 110, layer 138 and strength layer 108 in optical fiber cable assembly 162 can be omitted in optical fiber cable assembly 192 whereupon inner jacket 106 becomes the outer jacket. Other than these omissions, optical fiber cable assembly 192 can be the same as optical fiber cable assembly 162.

The various embodiments of the present invention enable the same number of optical fibers to be received in a smaller diameter cable assembly than the prior art optical fiber cable assemblies while maintaining an acceptable degree of mechanical loading capacity commensurate with its smaller outside diameter and lower linear weight. More specifically, when compared to prior art optical fiber cable assemblies, the present invention enables a reduction of 2 to 2 ½ times the diameter of the central interstitial member, a reduction of 12% to 15% of the diameter of the optical core, a reduction of 5% to 10% in the circumferences, thicknesses and weights of the various jackets, a reduction of 3 to 8 Aramid or fiber glass yarn ends and a reduction of 10% to 15% of the overall cost of the cable assembly, while at the same time, increasing the tensile strength and modulus of elasticity of the overall cable assembly. Because of these advantages, especially the reduction in the overall linear weight of the cable assembly, smaller, lighter and less expensive mounting hardware can be utilized to install the optical fiber cable assemblies of the present invention.

The invention has been described with reference to the preferred embodiments. Obvious modifications and alterations will occur to others upon reading and understanding the preceding detailed description. For example, for duct applications, central interstitial member can be formed from a bundle of Aramid or fiber glass yarn ends either alone or encased in a plastic coating. Moreover, in the preceding detailed description, the word "tangent" is utilized to describe a touching relationship between elements. However, due to minor manufacturing variations, some elements may have small gaps therebetween. Accordingly, in the preceding description, the word "tangent" is also intended to be construed as including a relationship where elements may be tangent at most points along the length of the optical fiber cable assembly, but may not be touching at a few points along the length of the optical fiber cable assembly due to these minor variations. It is intended that the invention be construed as including all such modifications and alterations insofar as they come within the scope of the appended claims and the equivalents thereof.

## Claims

1. An optical fiber cable assembly comprising:
an optical core including a plurality of elongated, hollow buffer tubes, a plurality of elongated outer interstitial members and an elongated central interstitial member;
the plurality of buffer tubes arranged with their axes extending in the same direction with each buffer tube tangent to two other buffer tubes and with each pair of adjacent buffer tubes defining an outer interstitial space therebetween, the axis of each buffer tube positioned at a corner of one of (i) an imaginary triangle and (ii) an imaginary square;
each outer interstitial member received in one of the outer interstitial spaces tangent to the two buffer tubes defining the outer interstitial space with an axis of each outer interstitial member extending in the same direction as the axes of the buffer tubes; and
the central interstitial member received in a central interstitial space formed between the plurality of buffer tubes, the central interstitial member positioned tangent to the plurality of buffer tubes with an axis of the central interstitial member extending in the same direction as the axes of the buffer tubes, wherein the central interstitial member and the outer interstitial members have different moduli of elasticity.

2. The optical fiber cable assembly as set forth in claim 1, wherein the central interstitial member has a modulus of elasticity that is larger than a modulus of elasticity of each outer interstitial member.

3. The optical fiber cable assembly as set forth in claim 2, wherein the central interstitial member has a modulus of elasticity of 50,300 N/mm² ±10%.

4. The optical fiber cable assembly as set forth in claim 3, wherein the central interstitial member is a fiber reinforced plastic rod having a silica fiber content between 70% and 85% by volume.

5. The optical fiber cable assembly as set forth in claim 2, wherein each outer interstitial member has a modulus of elasticity of 37,700 N/mm² ± 10%.

6. The optical fiber cable assembly as set forth in claim 5, wherein each outer interstitial member is a fiber reinforced plastic rod having a silica fiber content between 50% and 70%.

7. The optical fiber cable assembly as set forth in claim 2, wherein the outer interstitial members and buffer tubes are wound spirally around the central interstitial member.

8. The optical fiber cable assembly as set forth in claim 7, wherein the outer interstitial members and buffer tubes are wound spirally at a winding pitch between 8 and 20 times a diameter of the optical core.

9. The optical fiber cable assembly as set forth in claim 8, wherein the outer interstitial members and buffer tubes are wound spirally at a winding pitch between 8 and 16 times the diameter of the optical core for aerial applications and between 10 and 20 times the diameter of the optical core for duct applications.

10. The optical fiber cable assembly as set forth in claim 1, further including at least one of (i) a Mylar tape and (ii) a polyester binder disposed around the optical core tangent to the buffer tubes and outer interstitial members.

11. The optical fiber cable assembly as set forth in claim 10, further including an elongated rip cord disposed on a side of the Mylar tape and/or polyester binder opposite the optical core, the rip cord having a longitudinal axis extending in the same direction as the axes of the buffer tubes.

12. The optical fiber cable assembly as set forth in claim 10, further including a jacket comprised of polyolefin or polyester surrounding the Mylar tape and/or polyester binder.

13. The optical fiber cable assembly as set forth in claim 1, further including:
an inner jacket comprised of polyolefin or polyester surrounding the optical core;
a strength layer comprised of Aramid or fiber glass yarn surrounding the first jacket; and
an outer jacket comprised of polyolefin or polyester surrounding the strength layer.

14. The optical fiber cable assembly as set forth in claim 13, further including at least one of(i) a Mylar tape and (ii) a polyester binder disposed between the strength layer and the outer jacket.

15. The optical fiber cable assembly as set forth in claim 14, further including an elongated rip cord disposed between the outer jacket and the Mylar tape and/or polyester binder, the rip cord having a longitudinal axis extending in the same direction as the axes of the buffer tubes.

16. An optical fiber cable assembly comprising:
a plurality of elongated fiber optic conduits received around a longitudinally extending central axis with a longitudinal axis of each fiber optic conduit extending in the same direction as the central axis and with each fiber optic conduit tangent to two other fiber optic conduits, the plurality of fiber optic conduits defining a central interstitial space therebetween and defining a plurality of outer interstitial spaces between each pair of fiber optic conduits on a side thereof opposite the central interstitial space;
a plurality of elongated outer interstitial members received around the central axis with their longitudinal axes extending in the same direction as the central axis, each outer interstitial space receiving one of the outer interstitial members tangent to the pair of fiber optic conduits defining the outer interstitial space; and
a central interstitial member received in the central interstitial space tangent to the fiber optic conduits and with an axis of the central interstitial member coaxial with the central axis, wherein the central interstitial member has a larger modulus of elasticity than each outer interstitial member.

17. The optical fiber cable assembly as set forth in claim 16, wherein the outer interstitial members and the fiber optic conduits are wound spirally around the central interstitial member.

18. The optical fiber cable assembly as set forth in claim 16, wherein, when viewed from an end of the optical fiber cable assembly, the longitudinal axis of each fiber optic conduit is positioned at one corner of one of (i) an imaginary triangle and (ii) an imaginary square.

19. The optical fiber cable assembly as set forth in claim 16, further including at least one jacket surrounding the buffer tubes and outer interstitial members, wherein, when at least two jackets surround the buffer tubes and interstitial members, the at least two jackets are substantially coaxial.

20. The optical fiber cable assembly as set forth in claim 19, further including at least one of a Mylar tape and a polyester binder disposed at least one of (i) inside the at least one jacket and (ii) between the at least two jackets.

21. The optical fiber cable assembly as set forth in claim 20, further including an elongated rip cord disposed between at least one of (i) the at least one jacket and the at least one of the Mylar tape and the polyester binder surrounding the buffer tubes and outer interstitial members and (ii) between the at least two jackets, the rip cord having a longitudinal axis extending in the same direction as the axes of the buffer tubes.

22. The optical fiber cable assembly as set forth in claim 21, further including a strength layer disposed between the at least two jackets.

23. The optical fiber cable assembly as set forth in claim 22, wherein:
the strength layer is an Aramid or fiber glass yarn; and
each jacket is formed from polyolefin or polyester.

24. An optical fiber cable assembly comprising:
a plurality of elongated cylindrical fiber optic tubes arranged with their axes extending in the same direction, the axis of each fiber optic tube positioned at a corner of one of(i) an imaginary triangle and (ii) an imaginary square, the plurality of fiber optic tubes arranged with each fiber optic tube tangent to two other fiber optic tubes and a first imaginary tube which surrounds the fiber optic tubes and which has an imaginary axis which extends in the same direction as the axes of the fiber optic tubes, with each pair of adjacent fiber optic tubes and the first imaginary tube defining therebetween an interstitial space;
a plurality of elongated cylindrical interstitial members, each interstitial member received in one of the interstitial spaces tangent to the two fiber optic tubes and the first imaginary tube defining the interstitial space, with the axis of the interstitial member extending in the same direction as the axes of the fiber optic tubes; and
a plurality of elongated cylindrical grounding members surrounding the plurality of tubes and the plurality of interstitial members, the axes of the grounding members extending in the same direction as the axes of the fiber optic tubes, the plurality of grounding members arranged whereupon each grounding member is tangent to two other grounding members and the first imaginary tube, wherein:
the tubes and the interstitial members are wound spirally in a first direction around the imaginary axis;
the grounding members are wound spirally in a second direction, opposite the first direction, around the imaginary axis;
at various spaced points along the length of the optical fiber cable, each grounding member is tangent to each fiber optic tube and each interstitial member;
the tubes and the interstitial members are wound spirally at a winding pitch between 9.5 and 16 times the diameter of the first imaginary tube; and
the grounding members are wound spirally at a winding pitch between 10 and 16 times the diameter of a second imaginary tube which is coaxial with the first imaginary tube and which surrounds the grounding members and is tangent to the grounding members.

25. The optical fiber cable assembly as set forth in claim 24, further including a central elongated cylindrical interstitial member received in a central interstitial space formed between the plurality of fiber optic tubes when they are arranged with their axes positioned at the corners of the imaginary square, the central interstitial member positioned tangent to the plurality of fiber optic tubes with an axis of the central interstitial member extending in the same direction as the axes of the fiber optic tubes.

26. The optical fiber cable assembly as set forth in claim 24, wherein each fiber optic tube is configured to receive a plurality of optical fibers.
